**Europäisches Patentamt**

**European Patent Office**

**Office européen des brevets**

(19)

(11) Veröffentlichungsnummer: **0 043 543**
**B1**

(12) # EUROPÄISCHE PATENTSCHRIFT

(45) Veröffentlichungstag der Patentschrift:
23.11.83

(51) Int. Cl.³: **B 29 D 27/00**, B 29 F 1/12

(21) Anmeldenummer: 81105063.2

(22) Anmeldetag: 30.06.81

(54) Vorrichtung zum Herstellen von Mehrschichtformteilen aus thermoplastischen Kunststoffen.

(30) Priorität: 05.07.80 DE 3025597

(43) Veröffentlichungstag der Anmeldung:
13.01.82 Patentblatt 82/2

(45) Bekanntmachung des Hinweises auf die Patenterteilung:
23.11.83 Patentblatt 83/47

(84) Benannte Vertragsstaaten:
AT DE FR GB IT

(56) Entgegenhaltungen:
DE - A - 2 342 789
DE - A - 2 346 135
DE - A - 2 449 758
DE - A - 2 800 482
DE - B - 2 259 818
US - A - 3 921 856
US - A - 4 117 955

(73) Patentinhaber: Battenfeld Maschinenfabriken GmbH,
Scherl 10, D-5882 Meinerzhagen 1 (DE)

(72) Erfinder: Eckardt, Helmut, Obere Klappeiche 4,
D-5912 Hilchenbach (DE)

(74) Vertreter: Hemmerich, Friedrich Werner et al,
Patentanwälte F.W. Hemmerich Gerd Müller, Dipl.-Ing. D.
Grosse Felix Pollmeier Hammerstrasse 2,
D-5900 Siegen 1 (DE)

ACTORUM AG

Vorrichtung zum Herstellen von Mehrschicht-Formteilen aus thermoplastischen Kunststoffen

Die Erfindung betrifft eine Vorrichtung zum Herstellen von Mehrschicht-Formteilen aus thermoplastischem Kunststoff, z.B. mit einem geschäumten Kern und einer ungeschäumten Aussenhaut, durch Spritzgiessen, bestehend aus einem mit mindestens zwei getrennten Spritzzylindern verbundenen Spritzkopf, der eine Zentraldüse und eine diese umgebende Ringdüse aufweist, welche jeweils durch axial verschiebbare Schliessorgane absperrbar sind, und bei welcher die Mündung der Zentraldüse beim Spritzvorgang in Strömungsrichtung vor der Ringdüsen-Mündung liegt.

Durch die DE-B-22 59 815, die DE-A-23 42 789, die DE-A-23 42 794, die DE-A-23 46 135 und die DE-A-24 49 758 sind bereits verschiedene Ausführungsformen von Spritzgiessvorrichtungen bekannt. Diese haben jedoch alle den Nachteil, dass sie eine komplizierte und damit im Betrieb verhältnismässig störanfällige Bauart aufweisen. Bei ihnen ist nämlich die Zentraldüse axial verschiebbar vorgesehen, damit die diese konzentrisch umgebende Ringdüse bedarfsweise geöffnet und geschlossen werden kann. Andererseits ist der Zentraldüse eine ebenfalls axial verschiebbare Düsennadel zugeordnet, mit deren Hilfe das Öffnen und Schliessen derselben bewirkt werden kann.

Durch diesen Aufbau der bekannten Spritz-·giessvorrichtungen ist es nicht nur notwendig, zur funktionsgerechten Betätigung von Ringdüse und Zentraldüse getrennte Verschiebeantriebe vorzusehen, sondern in den Spritzkopf und/oder in die Zentraldüse müssen noch verhältnismässig kompliziert gestaltete Strömungskanäle eingearbeitet werden, die den thermoplastischen Kunststoff der Ringdüse zuführen. Dabei liegt es auf der Hand, dass die kompliziert gestalteten Strömungskanäle die Strömungsverhältnisse für den thermoplastischen Kunststoff innerhalb des Spritzkopfes beeinträchtigen.

Der US-A-4 117 955 ist eine gattungsgemässe Spritzgiessvorrichtung bekannt, bei der ebenfalls die Zentraldüse axial verschiebbar vorgesehen ist, um mit ihrer Hilfe die sie konzentrisch umgebende Ringdüse bedarfsweise öffnen und schliessen zu können.

Im Gegensatz zu den Spritzgiessvorrichtungen der zuerst erwähnten Bauart, weist diejenige nach der US-A-4 117 955 keine der Zentraldüse zugeordnete Düsennadel auf. Das Öffnen und Schliessen der Zentraldüse wird hier vielmehr mit beträchtlichem Abstand vor der Zentraldüsen-Mündung durch steuerschiebeartiges Zusammenwirken der Zentraldüse mit einem in einem stationären Führungsteil vorgesehenen Strömungskanal bewirkt.

Durch das Fehlen einer der Zentraldüse zugeordneten Düsennadel weist die Spritzgiessvorrichtung nach der US-A-4 117 955 zwar gegenüber den anderen bekannten Spritzgiessvorrichtungen eine unkompliziertere Bauart auf. Sie hat jedoch in funktioneller Hinsicht beträchtliche Nachteile, die hauptsächlich darin begründet liegen, dass nur die Ringdüse im Bereich ihrer Mündung geöffnet und geschlossen werden kann, nicht jedoch die Zentraldüse. Aufgrund dieser bekannten Ausgestaltung einer Spritzgiessvorrichtung können keine befriedigenden Arbeitsergebnisse erzielt werden. Einerseits kann nämlich beim Spritzen des Hautmaterials aus der Ringdüse nicht verhindert werden, dass dieses übermässig stark und tief in das Kernmaterial eindringt. Andererseits ist es aber noch wesentlich problematischer, dass beim Spritzen des Hautmaterials im Bereich der Ringdüse aus der Zentraldüse Kernmaterial so mitgerissen wird, dass sich empfindliche Störungen an dem gespritzten Artikel einstellen. Diese Unzulänglichkeiten resultieren daraus, dass der Materialfluss aus der Ringdüse und der Zentraldüse praktisch nur gleichzeitig, also nicht zeitverschoben, freigegeben und unterbrochen werden kann.

Ein anderer Nachteil dieser bekannten Spritzgiessvorrichtung liegt auch darin, dass sich beim Absperren der Zentraldüse in deren zwischen der Absperrstelle und der Düsenmündung liegendem Kanalabschnitt Kernmaterial befindet, welches nicht mehr ausgetrieben wird, sondern vielmehr stopfenartig aushärtet. Beim nachfolgenden Spritzvorgang wird dann durch diesen Stopfen über einen nichtbestimmbaren Zeitabschnitt hinweg das Ausströmen von Kernmaterial aus der Zentraldüse verhindert, und zwar solange, bis der Stopfen sich löst und in das Hautmaterial ausgetrieben wird. Der vor dem Lösen des Stopfens aus der Zentraldüse gebildete Artikelstrang besteht dann jedoch nur aus Hautmaterial und ist demzufolge praktisch unbrauchbar.

Zweck der Erfindung ist es, die Nachteile aller bekannten Spritzgiessvorrichtungen der vorgenannten Art zu vermeiden. Der Erfindung liegt deshalb die Aufgabe zugrunde, eine Spritzgiessvorrichtung der gattungsgemässen Art so auszulegen, dass sie bei einfachem und damit kostengünstig zu verwirklichendem Aufbau ein Minimum an bewegten Teilen aufweist sowie unter Sicherstellung eines strömungsgünstigen Materialflusses in beiden Düsenbereichen eine exakte Öffnungs- und Schliesssteuerung für die Düsenmündung gewährleistet.

Die Lösung dieser Aufgabe wird erfindungsgemäss durch die im Kennzeichnungsteil des ersten Anspruches angegebenen Merkmale gelöst.

Aus der Benutzung dieser Merkmale ergibt sich nicht nur der besondere Vorteil, dass die den Spritzkopf bildenden Bauteile eine weitestgehend rotationssymmetrische Gestaltung erhalten können und sich daher mit grosser Genauigkeit rationell herstellen sowie auch zusammenbauen und demontieren lassen. Vielmehr erweist es sich als besonders zweckmässig, dass beim Spritzen des Hautmaterials dieses vom Kernmaterial solange mechanisch getrennt gehalten wird, bis eine störende Vermischung beider Materialien nicht mehr eintreten kann. Es wird also zuerst das Hautmaterial und dann das Kernmaterial mittels einer einfach aufgebauten Düsenanordnung durch nur eine gemeinsame Düsennandel technisch zufriedenstellend verarbeitet. Diese einwandfreie Arbeitsweise ist dabei darauf zurückzuführen, dass beide Spritzkanäle an der Düsenspitze angeschlossen werden, dass beim Spritzen des Hautmaterials aus der Ringdüse die Öffnung für das Kernmaterial in der Zentraldüse verschlossen ist und dass das beim Verschieben der Düsennadel in die Schliessstellung in der Öffnung der Zentraldüse befindliche Kernmaterial ausgestossen und durch das Hautmaterial weggespült wird, so dass beim nächsten Schuss der Spritzgiessvorrichtung zunächst wieder nur Hautmaterial vorliegt.

Wird eine erfindungsgemässe Spritzgiessvorrichtung mit einer an ihrem vorderen Ende über einen gewissen Längenabschnitt auf kleineren Durchmesser abgesetzten und von rückwärts in die Zentraldüse hineinragenden Düsennadel ausgestattet, deren abgesetzter Längenbereich die innere Begrenzung einer ringförmigen Düsenkammer in der Zentraldüse bildet, während deren Längenbereich grösseren Durchmessers als Führung dient, dann erweisen sich nach der Erfindung die im Kennzeichnungsteil des zweiten Anspruchs aufgezeigten Massnahmen für eine optimale Steuerung der Zufuhr des thermoplastischen Kunststoffs zur Zentraldüse als vorteilhaft.

Die bauliche Ausgestaltung für eine erfindungsgemässe Spritzgiessvorrichtung lässt sich durch die in den Ansprüchen 3 bis 11 angegebenen Merkmale in optimaler Weise so weiterbilden, dass sich nicht nur die einzelnen Bauteile mit verhältnismässig einfachen Bearbeitungsvorgängen herstellen lassen, sondern auch einen problemlosen Zusammenbau und eine einfache Demontage des Spritzkopfes gewährleisten.

Nachfolgend wird ein in der Zeichnung dargestelltes Ausführungsbeispiel der Erfindung erläutert. Es zeigt

Fig. 1 teilweise im Schnitt und teilweise in der Seitenansicht eine Spritzgiessvorrichtung, bei der zwei Schneckenplastifizierzylinder mit einem einzigen Spritzkopf zur Herstellung von Mehrschicht-Formteilen aus thermoplastischem Kunststoff zusammenarbeiten,

Fig. 2 in grösserem Massstab und im Längsschnitt den Spritzkopf der Spritzgiessvorrichtung nach Fig. 1, wobei zwei im rechten Winkel zueinander liegende Halbschnitte in die Zeichnungsebene gelegt sind, während

Fig. 3 einen Schnitt entlang der Linie III–III in Fig. 2 wiedergibt und ausserdem die in der Fig. 2 entsprechende Schnittebene II–II andeutet.

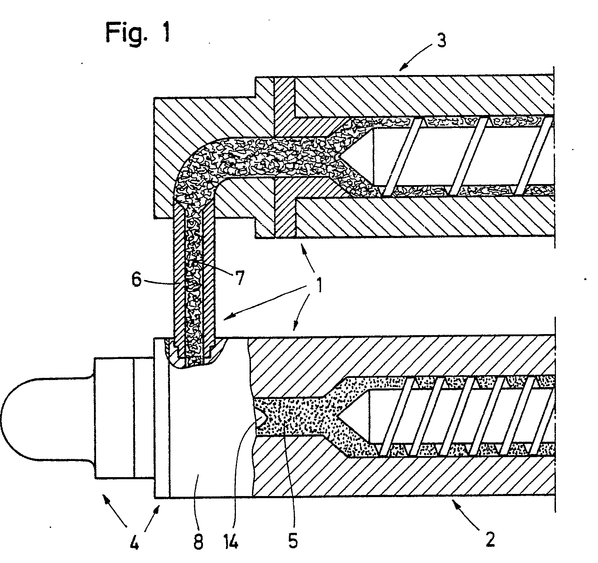

Die in der Zeichnung dargestellte Spritzgiessvorrichtung 1 zur Herstellung von Mehrschicht-Formkörpern aus thermoplastischem Kunststoff, die beispielsweise einen geschäumten Kern und eine ungeschäumte Aussenhaut aufweisen, weist zwei Spritzzylinder 2 und 3 auf, die beispielsweise als Schneckenplastifizierzylinder ausgeführt sind. Dabei erstrecken sich die beiden Spritzzylinder 2 und 3 gemäss Fig. 1 parallel zueinander. Möglich ist es natürlich auch, den Spritzzylinder 3 relativ zum Spritzzylinder 2 geneigt anzuordnen oder ihn in dazu rechtwinkliger Lage vorzusehen.

Koaxial zum Spritzzylinder 2 ist an dessen vorderes Ende der Spritzkopf 4 angeordnet, wobei in diesen einerseits aus dem Spritzzylinder 2 unmittelbar plastifiziertes Kunststoffmaterial 5 eingeführt werden kann, während in ihn andererseits aus dem Spritzzylinder 3 mittelbar über einen Zuführkanal 6 plastifiziertes Kunststoffmaterial 7 einführbar ist.

Der Spritzkopf 4 ist so ausgebildet und hat eine solche Arbeitsweise, dass mit seiner Hilfe Mehrschicht-Formteile gefertigt werden können, die beispielsweise einen geschäumten Kern und eine ungeschäumte Aussenhaut aufweisen. Bei dem in der Zeichnung dargestellten Ausführungsbeispiel einer Spritzgiessvorrichtung wird das plastifizierte Kunststoffmaterial 7 aus dem Spritzzylinder 3 als Kernmaterial und das plastifizierte Kunststoffmaterial 5 aus dem Spritzzylinder 2 als Hautmaterial benutzt.

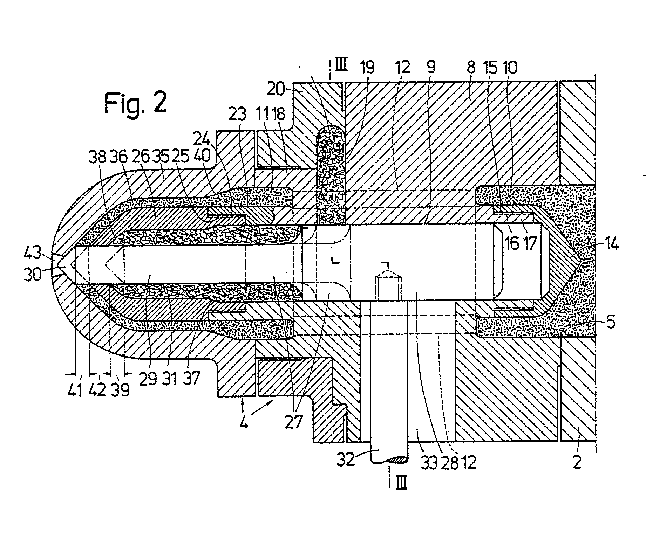

Der Düsenkopf 4 der in der Zeichnung dargestellten Spritzgiessvorrichtung 1 hat ein Hauptgehäuse 8, welches mit der Stirnfläche des Spritzzylinders 2 verbunden, beispielsweise an diese angeflanscht ist, wie das den Fig. 1 und 2 entnommen werden kann.

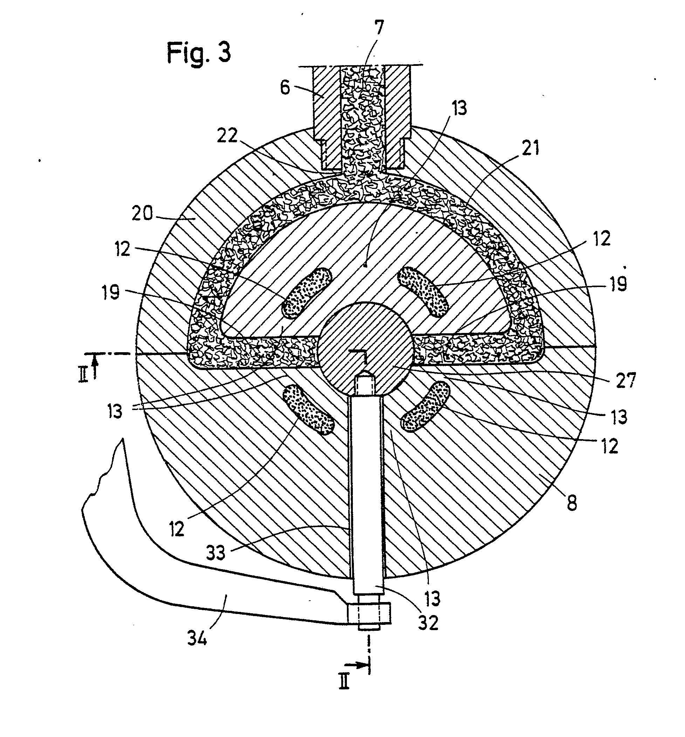

Aus Fig. 2 ergibt sich, dass das Hauptgehäuse 8 eine Zentralbohrung 9 aufweist und an beiden Stirnseiten mit konzentrisch zu dieser Zentralbohrung 9 je mit einer Ringnut 10 versehen ist. Zwischen den beiden Ringnuten 10 und 11 sind mehrere, beispielsweise vier, achsparallel zur Zentralbohrung 9 verlaufende Verbindungskanäle 12 angeordnet, die gemäss Fig. 3 in Umfangsrichtung gleichmässig verteilt um die Zentralbohrung 9 angeordnet sind und jeweils einen ringsegmentförmigen Querschnitt haben, wobei die Bogenradien der Ringsegmente mit den Bogenradien der beiden Ringnuten 10 und 11 übereinstimmen.

Zwischen den benachbarten Verbindungskanälen 12 bleibt im Hauptgehäuse 8 jeweils ein Materialsteg 13 stehen, wie das aus Fig. 3 deutlich hervorgeht.

Das hintere Ende der Zentralbohrung 9 ist durch einen sich entgegen der Förderrichtung des Spritzzylinders 2 verjüngenden, kappenartigen Leitkörper 14 für das Kunststoffmaterial 5 verschlossen, wobei der Leitkörper 14 beispielsweise über ein Innengewinde 15 auf das Aussengewinde 16 eines abgesetzten Halsteils 17 aufgeschraubt ist, welches die Zentralbohrung 9 gegen die Ringnut 10 abgrenzt.

Am vorderen Ende ist das Hauptgehäuse 8 mit einem Hals 18 versehen, in dem sich einerseits die Ringnut 11 befindet und der andererseits im Abstand hinter dieser Ringnut sowie innerhalb zweier sich diametral gegenüberliegender Stege 13 je einen Radialkanal 19 enthält, wie das aus den Fig. 2 und 3 ersichtlich ist. In Axialrichtung ist auf den Hals 18 ein Ringflansch 20 aufgeschoben in den ein halbkreisförmiger Ringkanal 21 so eingearbeitet ist, dass er an seinen Enden an der Umfangsfläche des Halses 18 in die beiden Radialkanäle 19 des Hauptgehäuses 8 mündet. Gemäss Fig. 3 hat der halbkreisförmige Ringkanal 21 wiederum im Bereich seiner halben Länge einen radialen Anschlusskanal 22 für den Zuführkanal 6 des Spritzzylinders 3.

Am vorderen Ende des Hauptgehäuses 8 ist, über den Hals 18 axial vorstehend, wiederum ein Hals 23 vorhanden, dessen Aussendurchmesser mit dem Innendurchmesser der Ringnut 11 übereinstimmt, während sein kleinster Innendurchmesser durch die Zentralbohrung 9 bestimmt wird. In ein abgesetztes Innengewinde 24 des Halses 23 ist mittels eines abgesetzten Aussengewindes 25 ein Zentraldüsenkörper 26 eingeschraubt, der sich mit seinem Innenumfang an die Zentralbohrung 9 des Hauptgehäuses 8 anschliesst, während sein Aussenumfang den gleichen Durchmesser, wie der Aussenumfang des Halses 23 hat.

Innerhalb der Zentralbohrung 9 des Hauptgehäuses 8 ist eine Düsennadel 27 mittels ihres hinteren Längenabschnitts 28 axial verschiebbar geführt. Ihr vorderer Längenabschnitt 29 ist auf einen kleineren Durchmesser abgesetzt und vorne mit einer kegelförmigen Spitze 30 versehen. Der vordere Längenabschnitt 29 kleineren Durchmessers der Düsennadel 27 begrenzt zusammen mit dem Zentraldüsenkörper 26 und der koaxial daran anschliessenden Zentralbohrung 9 des Hauptgehäuses 8 eine im Querschnitt ringförmige Zentraldüsenkammer 31. Diese Zentraldüsenkammer 31 kann durch Axialverschiebung der Düsennadel 27 wahlweise mit den Radialkanälen 19 des Hauptgehäuses 8 in Strömungsverbindung gebracht oder gegenüber diesen abgesperrt werden. Zu diesem Zweck wirkt der hintere, den grösseren Durchmesser aufweisende Längenabschnitt 28 der Düsennadel 27 mit den Radialkanälen 19 des Hauptgehäuses 8 innerhalb der Zentralbohrung 9 als Ventilschieber zusammen. Dieser trennt sowohl in der durch voll ausgezogene Linien als auch in der durch gestrichelte Linien in Fig. 2 angedeuteten Schiebestellung der Düsennadel 27 die Radialkanäle 19 von der Zentraldüsenkammer 31 ab. Hingegen stellt er in der durch strichpunktierte Linien in Fig. 2 angedeuteten Schiebestellung der Düsennadel 27 die Strömungsverbindung zwischen den Radialkanälen 19 und der Zentraldüsenkammer 31 her.

Die Düsennadel 27 ist mittels eines radialen Betätigungsarmes 32 verschiebbar, der durch einen radialen Längsschlitz seitwärts aus dem Hauptgehäuse 8 herausragt und an dem ein Verstellgestänge 34 angreift. Dabei ist der radiale Längsschlitz 33 so angeordnet, dass er innerhalb des Hauptgehäuses 8 durch einen zwischen zwei benachbarten Verbindungskanälen 12 liegenden Materialsteg 13 hindurchführt, wie das aus Fig. 3 ersichtlich ist.

Der Fig. 2 ist zu entnehmen, dass der Zentraldüsenkörper 26 in konzentrischem Abstand von einem Ringdüsenkörper 35 umgeben wird, welcher an den Ringflansch 20 angeflanscht und gegen die Stirnfläche des Halses 18 des Hauptgehäuses 8 verspannt ist. Der Innendurchmesser des Ringdüsenkörpers 35 an seinem hinteren Ende entspricht dabei dem Aussendurchmesser der Ringnut 11 im Hals 18 des Hauptgehäuses 8, so dass zwischen ihm, dem Hals 23 des Hauptgehäuses 8 und dem Aussenumfang des Zentraldüsenkörpers 26 die Ringdüsenkammer 36 begrenzt wird.

Die Fig. 2 macht deutlich, dass die Zentraldüsenkammer 31 sich zunächst im Bereich einer strömungsgünstig geformten Schulter 37 etwa auf halber Länge in ihrem ringförmigen Durchströmquerschnitt verringert und dass sie über einen bogenförmigen Endabschnitt 38 zusammen mit der Spitze 30 der Düsennadel 27 die Zentraldüsenmündung 39 bildet, und zwar dann, wenn die Düsennadel 27 die in Fig. 2 strichpunktiert gezeichnete Schiebestellung einnimmt.

Auch die Ringdüsenkammer 36 vermindert sich in ihrem Durchströmquerschnitt im Bereich einer strömungsgünstig geformten Schulter 40 und wird dann nach vorne durch den konvergierenden Ringspalt zwischen dem Zentraldüsenkörper 26 und dem Ringdüsenkörper 35 zur Ringdüsenmündung 41 geführt, die geöffnet ist, wenn die Düsennadel 27 mit ihrer Spitze 30 die in Fig. 2 durch gestrichelte Linien angedeutete Schiebestellung einnimmt.

Die Fig. 2 macht deutlich, dass die Zentraldüsenmündung 39 und die Ringdüsenmündung 41 mit einem vorbestimmten und unveränderlichen, axialen Abstand 42 hintereinander in den Spritzkopf 4 münden und dabei die Zentraldüsenmündung 39 in Strömungsrichtung vor der Ringdüsenmündung 41 liegt. Ferner ist erkennbar, dass die Zentraldüsenmündung 39 und die Ringdüsenmündung 41 den gleichen Mündungsdurchmesser aufweisen und damit der vordere Längenabschnitt 29 der Düsennadel 27 sowohl als Schliessorgan für die Ringdüsenmündung 41 als auch als Schliessorgan für die Zentraldüsenmündung 39 benutzt werden kann.

In der durch voll ausgezogene Linien in Fig. 2 dargestellten Schiebestellung der Düsennandel 27 ist sowohl die Ringdüsenmündung 41 als auch die Zentraldüsenmündung 39 abgesperrt, sowie die Austrittsöffnung 43 des Spritzkopfes 4 verschlossen. In der durch gestrichelte Linien gezeichneten Schiebestellung der Düsennadel 27 ist die Austrittsöffnung 43 des Spritzkopfes 4 geöffnet und zugleich die Ringdüsenmündung 41 freigegeben. Sofern dann das in der Ringdüsenkammer 36 anstehende, plastifizierte Kunststoffmaterial durch den Spritzzylinder 2 unter Druck gesetzt wird, kann es durch die Ringdüsenmündung 41 und die Austrittsöffnung 43 in die anschliessende (nicht dargestellte) Spritzform hineingepresst werden.

Wird anschliessend die Düsennadel 27 in die durch strichpunktierte Linien in Fig. 2 angedeutete Stellung zurückgezogen, dann wird auch die Zentraldüsenmündung 39 geöffnet und zugleich die Zentraldüsenkammer 31 mit den Radialkanälen 19 in Strömungsverbindung gebracht. Wird sodann der Spritzzylinder 3 unter Druck gesetzt dann wird auch das plastifizierte Kunststoffmaterial 7 durch die Austrittsöffnung 43 in die (nicht dargestellte) Spritzform gebracht und zwar als Kernmaterial, welches von dem plastifizierten Kunststoffmaterial 5 als Hautmaterial allseitig umgeben ist.

Das als Kernmaterial dienende plastifizierte Kunststoffmaterial 7 kann dabei ein Treibmittel enthaltender und damit aufschäumender Kunststoff sein, während das thermoplastische Kunststoffmaterial 5 kein Treibmittel enthält und damit ohne Schaumbildung in die Spritzform gelangt.

Die vorstehend beschriebene Ausführungsform einer Spritzgiessvorrichtung ist so ausgelegt, dass der Spritzvorgang zunächst mit dem Austritt des plastifizierten Kunststoff-Materials 5 aus der Ringdüsenmündung 41 beginnt und daran anschliessend zusätzlich plastifiziertes Kunststoffmaterial aus der Zentraldüsenöffnung 39 zugeführt wird. Beim Abschluss des Spritzvorgangs wird zunächst wieder die Zufuhr des Kunststoffmaterials 7 aus de zentralen Düsenmündung 39 unterbrochen und anschliessend die Zufuhr des Kunststoffmaterials aus der Ringdüsenmündung 41 gestopt.

Es wäre jedoch auch ohne weiteres denkbar, den Spritzvorgang zunächst mit dem Austritt von Kunststoffmaterial 7 aus der Zentraldüsenmündung 39 zu beginnen und erst daran anschliessend Kunststoffmaterial 5 aus der Ringdüsenmündung 41 zuzuführen. In diesem Falle ist jedoch eine Gleichzeitigkeitsphase des Einspritzens beider Kunststoffmaterialien 5 und 7 nicht möglich und ausserdem müsste bei diesem Spritzvorgang zunächst die Ringdüsenkammer 36 drucklos bleiben, damit beim Öffnen der Ringdüsenmündung 41 kein Materialaustritt aus dieser stattfindet.

Die bauliche Ausgestaltung der vorstehend beschriebenen Spritzgiessvorrichtung 1 ist insofern vorteilhaft, als sämtliche Bauteile derselben als Drehteile ausgeführt werden können. Lediglich am Hauptgehäuse 8 und am Ringflansch 20 sind noch in geringfügigem Umfang zusätzlich Bohr- und Fräsarbeiten notwendig.

Abschliessend sei noch erwähnt, dass die radialen Verbindungskanäle 19 vom Spritzzylinder 3 zur Zentraldüsenkammer 31 einen Abstand von der Zentraldüsenmündung 39 haben, welcher gleich oder geringfügig kleiner als die Länge des auf den kleineren Durchmesser abgesetzten Längenabschnitts 28 der Düsennadel 27 bemessen ist. Hierdurch wird sichergestellt, dass der den grösseren Durchmesser aufweisende Längenabschnitt 28 der Düsennadel 27 den Ventilschieber bildet, über welchen die radialen Verbindungskanäle 19 zur Zentraldüsenkammer 31 bis zur Freigabe der Zentraldüsenmündung 39 durch das vordere Ende 30 der Düsennadel 27 abgesperrt werden. Für eine bauliche einfache Herstellung des Hauptgehäuses 8 und des Ringflansches 20 ist es schliesslich auch noch wichtig, dass der Ringkanal 21 einen kleinsten Radius aufweist, welcher grösser als der grösste Radius an der Ringdüsenkammer 36 bzw. an der Ringnut 11 bemessen ist. Der Ringkanal 21 lässt sich dann nämlich einfach in die Rückseite des Ringflansches 20 an dessen Innenumfang einfräsen, während die radialen Verbindungskanäle 19 sich als einfache Bohrungen im Hauptgehäuse 8 anbringen lassen.

In Abwandlung des beschriebenen Ausführungsbeispieles kann die Düsennadel 27 auch abgesetzt sein, d.h. im Bereich der Ringdüsenmündung 41 einen kleineren Durchmesser aufweisen als im Bereich der Zentraldüsenmündung 39, wobei dann auch die beiden Düsenmündungen unterschiedliche Durchmesser haben müssen.

## Patentansprüche

1. Vorrichtung zum Herstellen von Mehrschicht-Formteilen aus thermoplastischem Kunststoff, z.B. mit einem geschäumten Kern und einer ungeschäumten Aussenhaut, durch Spritzgiessen, bestehend aus einem mit mindestens zwei getrennten Spritzzylindern (2 und 3) verbundenen Spritzkopf (4), der eine Zentraldüse (26) und eine diese umgebende Ringdüse (35) aufweist, welche jeweils durch axial verschiebbare Schliessorgane (29) absperrbar sind, und wobei die Mündung (39) der Zentraldüse (26) beim Spritzvorgang in Strömungsrichtung vor der Ringdüsen-Mündung (41) liegt, dadurch gekennzeichnet, dass Zentraldüse (26) und Ringdüse (35) mit einem vorbestimmten axialen Abstand (42) und ortsfest hintereinander in den Spritzkopf (4) münden (39 und 41) und dabei beide Mündungen (39 und 41) den gleichen Mündungsdurchmesser aufweisen, und dass beiden Mündungen (39 und 41) ein und dieselbe Düsennadel (27) als Schliessorgan zugeordnet ist.

2. Vorrichtung nach Anspruch 1 mit einer an ihrem vorderen Ende über einen gewissen Längenabschnitt auf kleineren Durchmesser abgesetzten und von rückwärts in die Zentraldüse hineinragenden Düsennadel (27, deren abgesetzter Längenbereich die innere Begrenzung einer ringförmigen Düsenkammer in der Zentraldüse (26) bildet, während deren Längenbereich grösseren Durchmessers (28) als Führung dient, dadurch gekennzeichnet, dass der oder die Verbindungskanäle (19) zwischen dem einen Spritzzylinder (3) und der Zentraldüsenkammer (31) einen Abstand von der Zentraldüsenmündung (39) haben, welcher gleich oder geringfügig kleiner als die Länge des auf den kleineren Durchmesser abgesetzten Längenbereichs (29) der Düsennadel (27) bemessen ist, und dass der den grösseren Durchmesser aufweisende Längenbereich (28) der Düsennadel (27) einen Ventilschieber bildet, über den die Verbindungskanäle (19) zur Zentraldüsenkammer (31) bis zur Freigabe der Zentraldüsenmündung (39) durch das vordere Ende (30) der Düsennadel (27) absperrbar sind (Fig. 2).

3. Vorrichtung nach Anspruch 1 oder 2, dadurch gekennzeichnet, dass die Zentraldüsenkammer (31) konzentrisch von der Ringdüsenkammer (36) umgeben ist, wobei die Ringdüsenkammer (36) an den anderen Spritzzylinder (2) über einen oder mehrere achsparallel zur Düsennadel (27) verlaufende Verbindungskanäle (12) angeschlossen ist, während die Verbindungskanäle (19) zwischen dem einen Spritzzylinder (3) und der Zentraldüsenkammer (31) radial durch die Stege (13) zwischen den achsparallelen Verbindungskanälen (12) geführt sind (Fig. 3).

4. Vorrichtung nach einem der Ansprüche 1 bis 3, dadurch gekennzeichnet, dass der der Ringdüse (35, 41) zugeordnete Spritzzylinder (2) in Achsfluchtlage zum Spritzkopf (4) angeordnet ist (Fig. 1) und in eine Ringkammer (10; Fig. 2) fördert, an die sich die Verbindungskanäle (12) zur Ringdüsenkammer (36) anschliessen, während der der Zentraldüse (26, 39) zugeordnete Spritzzylinder (3) seitlich ausserhalb der Achsfluchtlage des Spritzkopfes (4) angeordnet und mit einem Ringkanal (21) innerhalb des Spritzkopfes (4) verbunden ist, von dem die Radialkanäle (19) zur Zentraldüsenkammer (31) ausgehen (Fig. 3).

5. Vorrichtung nach Anspruch 4, dadurch gekennzeichnet, dass der Ringkanal (21) einen kleinsten Radius aufweist, welcher grösser als der grösste Radius an der Ringdüsenkammer (36) bemessen ist und dass der Ringkanal (21) sich über einen Winkelbogen von etwa 180° erstreckt (Fig. 3).

6. Vorrichtung nach einem der Ansprüche 4 und 5, dadurch gekennzeichnet, dass vorzugsweise vier achsparallel zur Düsennadel (27) verlaufende Verbindungskanäle (12) vom Ringkanal (10) zur Ringdüsenkammer (36) bzw. einem an diese anschliessenden Ringkanal (11) geführt sind, deren jeder einen ringsegmentförmigen Querschnitt hat und die mit gleichmässigen Winkelabständen voneinander auf einem ihnen gemeinsamen Kreisbogen liegen (Fig. 3).

7. Vorrichtung nach einem der Ansprüche 1 bis 6, dadurch gekennzeichnet, dass der Spritzkopf (4) ein Hauptgehäuse (8) mit einer Zentralbohrung (9) zur Führung der Düsennadel (27) aufweist, welches an beiden Stirnseiten mit konzentrisch zur Zentralbohrung (9) angeordneten Ringnuten (10 und 11) versehen ist, zwischen denen der oder die achsparallelen Verbindungskanäle (12) verlaufen, und welches den oder die in die Zentralbohrung (9) mündenden radialen Verbindungskanäle (19) enthält (Fig. 2).

8. Vorrichtung nach Anspruch 7, dadurch gekennzeichnet, dass der oder die radialen Verbindungskanäle (19) an der Umfangsfläche eines an das Hauptgehäuse (8) angeformten Halses (18) münden, auf den ein Ringflansch (20) aufsteckbar ist, in dem sich der halbkreisförmige Ringkanal (21) mit einem wiederum radialen Anschlusskanal (22) befindet, und der gegen das Hauptgehäuse (8) verspannbar ist.

9. Vorrichtung nach Anspruch 7 oder 8, dadurch gekennzeichnet, dass das Hauptgehäuse (8) einen über den ersten Hals (18) hinausragenden und koaxial zu diesem angeordneten, zweiten Hals (23) aufweist, an den sich der Zentraldüsenkörper (26) anschliesst, (24, 25), während ein diesen konzentrisch umgebender Ringdüsenkörper (35) am Ringflansch (20) verankert und gegen die Stirnfläche des ersten Halses (18) verspannbar ist (Fig. 2).

10. Vorrichtung nach Anspruch 7, 8 oder 9, dadurch gekennzeichnet, dass das Hauptgehäuse (8) mit seiner Rückseite an den Spritzzylinder (2) angeflanscht ist und das hintere Ende seiner Zentralbohrung (9) durch einen sich entgegen der Förderrichtung des Spritzzylinders (2) verjüngenden, kappenartigen Leitkörper (14) abgeschlossen ist.

11. Vorrichtung nach einem der Ansprüche 1 bis 10, dadurch gekennzeichnet, dass die Düsennadel (27) durch einen radialen Betätigungsarm (32) verschiebbar ist, welcher durch einen radialen Längsschlitz (33) aus dem Hauptgehäuse (8) herausragt (Fig. 2).

**Revendications**

1. Dispositif de fabrication de pèces mouleés en matière synthétique thermoplastique composées de plusieurs couches, par exemple avec un cœur en matière alvéolaire et une peau extérieure non alvéolaire, par moulage par injection, se composant d'une tête d'injection (4) reliée à au moins deux cylindres d'injection séparés (2 et 3) et qui comporte une buse centrale (26) et, entourant celle-ci, une buse annulaire (35), qui sont chacune obturable par des organes d'oburation (29) déplaçables axialement, l'embouchure (39) de la buse centrale (26) étant, lors de l'injection, située en amont de l'embouchure (41) de la buse annulaire dans la direction de l'écoulement, caractérisé en ce que la buse centrale (26) et la buse annulaire (35) débouchent (39 et 41) dans la tête d'injection (4) avec une distance axiale prédéterminée (42) et sont fixes l'une à la suite de l'autre, ces deux embouchures (39 et 41) présentant le même diamètre d'embouchure, et en ce qu'aux deux embouchures (39 et 41) est affectée une seule et même aiguille de buse (27) en tant qu'organe d'obturation.

2. Dispositif selon la revendication 1 avec une aiguille de buse (27) dont l'extrémité antérieure est ramenée à un plus petit diamètre sur une certaine portion de sa longueur et qui est introduite par l'arrière dans la buse centrale, la dite portion de diamètre réduit formant la délimination intérieure d'une chambre de buse annulaire dans la buse centrale (26), tandis que la partie de plus grand diamètre (28) de la longueur de cette aiguille sert de guidage, caractérisé en ce que le ou les canaux de liaison (19) entre l'un (3) des cylindres d'injection et la chambre de buse centrale (31) sont à une distance de l'embouchure (39) de la buse centrale qui est égale ou à peine inférieure à la longueur du tronçon (29) de l'aiguille (27) de diamètre réduit et en ce que la partie (28) de la longueur de l'aiguille (27) présentant le plus grand diamètre forme un tiroir de valve par l'intermédiaire duquel les canaux (19 de liaison à la chambre de buse centrale (31) peuvent être obutrés jusqu'à ce que l'embouchure (39) de la buse centrale soit dégagée par l'extrémité antérieure (30) de l'aiguille (27) (fig. 2).

3. Dispositif selon la revendication 1 ou 2, caractérisé en ce que la chambre de buse centrale (31) est entourée concentriquement par la chambre de buse annulaire (36), cette dernière étant, par l'intermédiaire d'un ou plusieurs canaux de liaison (12) dont l'axe est parallèle à l'aiguille de buse (27), raccordée à l'autre cylindre d'injection (2), tandis que les canaux de liaison (19) entre l'un (3) des cylindres et la chambre de buse centrale (31) passent radialement par les ponts (13) entre les canaux de liaison (12) parallèles à l'axe (fig. 3).

4. Dispositif selon l'une des revendications 1 à 3, caractérisé en ce que le cylindre d'injection (2) affecté à la buse annulaire (35, 41) est dans l'axe de la tête d'injection (4) (fig. 1) et injecte dans une chambre annulaire (10; fig. 2) à laquelle se raccordent les canaux de liaison (12) à la chambre de buse annulaire (36), tandis que le cylindre d'injection (3) affecté à la buse centrale (26, 39) est disposé latéralement hors de l'axe de la tête d'injection (4) et est relié à un canal annulaire (21) dans la tête d'injection (4) duquel partent les canaux radiaux (19) vers la chambre (31) de la buse centrale (fig. 3).

5. Dispositif selon la revendication 4, caractérisé en ce que le canal annulaire (21) comporte un rayon minimum plus grand que le plus grand rayon à la chambre de buse annulaire (36) et en ce que le canal annulaire (21) s'étend sur l'arc d'un angle d'environ 180° (fig. 3).

6. Dispositif selon l'une des revendications 4 et 5, caractérisé en ce que de préférence quatre canaux de liaison (12) disposés parallèlement à l'axe de l'aiguille de buse (27) vont du canal annulaire (10) à la chambre de buse annulaire (36) respectivement à un canal annulaire (11) raccordé à celle-ci, chacun de ceux-ci ayant une section en forme de segment annulaire, et qui sont disposés à des distances angulaires régulières les uns des autres sur un arc de cercle commun (fig. 3).

7. Dispositif selon l'une des revendications 1 à 6, caractérisé en ce que la tête d'injection (4) comporte un carter principal (8) avec un alésage central (9) de guidage de l'aiguille de buse (27), ce carter étant muni aux deux extrémités de rainures annulaires (10 et 11) disposées concentriquement à l'alésage central (9), entre lesquelles s'étendent le ou les canaux de liaison (12) parallèles à l'axe et contenant le ou les canaux de liaison radiaux (19) qui débouchent dans l'alésage central (9) (fig. 2).

8. Dispositif selon la revendication 7, caractérisé en ce que le ou les canaux de liaison radiaux (19) débouchent à la surface périphérique d'une collerette (18) venue de moulage sur le carter principal (8) et sur laquelle peut être engagée une bride annulaire (20) dans laquelle se trouve le canal annulaire semi-circulaire (21) avec un canal de raccordement lui aussi radial (22), cette bride pouvant être fixée par serrage contre le carter principal (8).

9. Dispositif selon la revendication 7 ou 8, caractérisé en ce que le carter principal (8) présente une deuxième collerette (23) qui s'étend au-delà de la première collerette (18) et est disposée co-axialement à celle-ci, à laquelle se raccorde (24, 25) le corps de buse central (26), tandis qu'un corps de buse annulaire (35) qui entoure concentriquement celui-ci est ancré à la bride annulaire (20) et peut être fixé par serrage contre la face d'extrémité de la première collerette (18) (fig. 2).

10. Dispositif selon la revendication 7, 8 ou 9, caractérisé en ce que le carter principal (8) est bridé par sa face arrière au cylindre d'injection (2) et l'extrémité arrière de son alésage central (9) est fermée par un corps directeur (14) en forme de capot allant en s'amincissant en sens inverse de la direction dans laquelle le cylindre d'injection (2) déplace la matière.

11. Dispositif selon l'une des revendications 1 à 10, caractérisé en ce que l'aiguille de buse (27) peut être déplacée par un bras de manœuvre radial (32) qui sort du carter principal (8) par une fente longitudinale radiale (33) (fig. 2).

**Claims**

1. Apparatus for the manufacture of multilayer moulded parts of thermoplastic synthetic material, for example with a foamed core and an unfoamed outer skin, through injection moulding, consisting of an injection head (4), which is connected with at least two separate injection cylinders (2 and 3) and displays a central nozzle (26) and an annular nozzle (35) surrounding this, which nozzles are each blockable by axially displaceable closing organs (29) and wherein the mouth (39) of the central nozzle (26) during the injection step lies in flow direction before the annular nozzle mouth (41), characterised thereby, that the central nozzle (26) and annular nozzle (35) open (39 and 41) into the injection head (4) locally fixed one behind the other at a predetermined axial spacing and both mouths (39 and 41) in that case display the same mouth diameter and that one and the same nozzle needle (27) is associated as closure organ with both mouths (39 and 41).

2. Apparatus according to claim 1 with a nozzle needle (27), which projects from the rear into the central nozzle and at its front end is stepped down to smaller diameter over a certain length portion and the stepped-down length region of which forms the inner boundary of an annular nozzle chamber in the central nozzle (26), whilst its length region of greater diameter (28) serves as guide, characterised thereby, that the connecting channel or channels (19) between the one injection cylinder (3) and the central nozzle chamber (31) have a spacing from the central nozzle mouth (39), which is equal to or slightly smaller than the length of that length region (29) of the nozzle needle (27), which is stepped down to the smaller diameter, and that that length region (28) of the nozzle needle (27), which displays the greater diameter, forms a valve slide, by which the connecting channels (19) to the central nozzle chamber (31) are blockable until the central nozzle mouth (39) is freed by the front end (30) of the nozzle needle (27) (Fig. 2).

3. Apparatus according to claim 1 or 2, characterised thereby, that the central nozzle chamber (31) is sourrounded concentrically by the annular nozzle chamber (36), wherein the annular nozzle chamber (36) is connected to the other injection cylinder (2) through one or more connecting channels (12) extending axially parallel to the nozzle needle (27), while the connecting channels (19) between the one injection cylinder (3) and the central nozzle chamber (31) are conducted radially through the webs (13) between the axially parallel connecting channels (12) (Fig. 3).

4. Apparatus according to one of the claims 1 to 3, characterised thereby, that the injection cylinder (2) associated with the annular nozzle (35, 41) is arranged (Fig. 1) in axially aligned position relative to the injection head (4) and conveys into an annular chamber (10; Fig. 2), that which the connecting channels (12) to the annular nozzle chamber (36) are connected, whilst the injection cylinder (3) associated with the central nozzle (26, 39) is arranged laterally outside the axially aligned position of the injection head (4) and connected with an annular channel (21) within the injection head (4), from which the radial channels (19) emanate to the central nozzle chamber (31) Fig. 3).

5. Apparatus according to claim 4, characterised therby, that the annular channel (21) displays a smallest radius which is dimensioned to be greater than the greatest radius at the annular nozzle chamber (36) and that the annular channel (21) extends over an angular arc of about 180° (Fig. 3).

6. Apparatus according to one of the claims 4 and 5, characterised thereby, that preferably four connecting channels (12), which extend axially parallel to the nozzle needle (27), are conducted from the annular channel (10) to the annular nozzle chamber (36) or to an annular channel (11) adjoining this, each have a cross-section in the shape of an annular segment and lie on a common circular arc at uniform angular spacings one from the other (Fig. 3).

7. Apparatus according to one of the claims 1 to 6, characterised thereby, that the injection head (4) displays a main housing (8) with a central bore (9) for the guidance of the nozzle needle (27), which housing is provided at both end faces with annular grooves (10 and 11), which are arranged concentrically with the central bore (9) and between which the axially parallel connecting channel or channels (12) extends or extend, and which contains the radial connecting channel or channels (19) opening into the central bore (9) (Fig. 2).

8. Apparatus according to claim 7, characterised thereby, that the radial connecting channel or channels (19) opens or open at the circumferential surface of a neck (18), which is shaped on at the main housing (8) and onto which an annular flange (20) is mountable, in which the semicircular annular channel (21) with an again radial connecting channel (22) are disposed, and which is tightenable against the main housing (8).

9. Apparatus according to claim 7 or 8, characterised thereby, that the main housing (8) displays a second neck (23), which projects beyond the first neck (18) and is arranged co-axially therewith and at which the central nozzle body (26) adjoins (24, 25), whilst an annular nozzle body (35) surrounding this concentrically is anchored at the annular flange (20) and tightenable against the end face of the first neck (18) (Fig. 2).

10. Apparatus according to claim 7, 8 or 9, characterised thereby, that the main housing (8) is flanged by its rear side to the injection cylinder (2) and the rearward end of its central bore (9) is closed off by a cap-like guide body (14) narrowing against the conveying direction of the injection cylinder (2).

11. Apparatus according to one of the claims 1 to 10, characterised thereby, that the nozzle needle (27) is displaceable through a radial actuating arm (32), which projects through a radial longitudinal slot (33) out of the main housing (8) (Fig. 2).

1/3

# Fig. 1

Fig. 2

Fig. 3